# EUROPÄISCHE PATENTANMELDUNG

(11) **EP 1 079 558 A2**
(43) Veröffentlichungstag der Anmeldung: **28.02.2001**
(21) Anmeldenummer: 00115894.8
(22) Anmeldetag: 25.07.2000
(51) Int. Cl.: H04H 1/00, H04B 1/06

(54) **Rundfunkempfänger zum Empfang von Rundfunksignalen, mit digitaler Verarbeitung der empfangenen Signalen**

(30) Priorität: 25.08.1999 DE 19940265
(71) Anmelder: ROBERT BOSCH GMBH, 70442 Stuttgart (DE)
(72) Erfinder: Petersen, Detlev, 31139 Hildesheim (DE); Rosebrock, Ralf, 30880 Laatzen (DE); Schneiders, Peter, 31141 Hildesheim (DE); Hallier, Jürgen, 31188 Lutturm (DE)

(57) **Zusammenfassung**

Es wird ein Rundfunkempfänger (3) zum Empfang von Rundfunksignalen vorgeschlagen, der dazu dient, Daten aus den Rundfunksignalen zu entnehmen und über einen Bus (8) eines Rechners zu anderen Komponenten des Rechners zu versenden. Der Rundfunkempfänger (3) umfaßt einen Hochfrequenzeingang (2), ein Hochfrequenzempfangsteil (4), einen Analog-Digital-Wandler (5), einen Prozessor (6) und eine Schnittstelleneinheit (7). Die empfangenen Rundfunksignale werden mittels des Hochfrequenzempfangsteils (4) demoduliert, mit dem Analog-Digital-Wandler (5) digitalisiert, so daß digitale Daten vorliegen. Der Prozessor (6) führt an den digitalen Daten eine Fehlererkennung und eine Fehlerkorrektur und eine Zusammenfassung von zusammengehörigen Daten durch, worauf die Schnittstelleneinheit (7) die Daten zu einem Prozessor (15) des Rechners über den Bus (8) versendet. Der Prozessor (15) führt eine Dekodierung der Daten durch und versendet die dekodierten Daten an Darstellungseinrichtungen des Rechners. Der Rundfunkempfänger ist für den Einsatz für den industrietauglichen Compact PCI-Standard ausgelegt.

## Beschreibung

### Stand der Technik

Die Erfindung geht aus von einem Rundfunkempfänger zum Empfang von Rundfunksignalen nach der Gattung des unabhängigen Patentanspruchs.

Es ist bereits bekannt, daß der sogenannte Compact PCI (Peripheral Component Interface)-Bus für mechanisch anspruchsvolle Umgebungen standardisiert wurde. In der Compact PCI-Specification (Short Form), PICMG 2.0 R. 2.1, 02.09.1997, sind die wesentlichen Elemente des Compact PCI-Standards dargelegt.

Bei dem Compact PCI-Standard wird eine Platte verwendet, die Steckplätze aufweist, wobei die Steckplätze Stecker mit Pins aufweisen und Führungen, so daß die Compact PCI-Karten, die in diese Steckplätze eingeführt werden sollen, leicht mit der Platte verbunden werden können. Für eine bessere mechanische Verbindung ist eine Verschraubung der Compact PCI-Karten mit der Platte vorgesehen. Dadurch ist der Compact PCI-Standard industrietauglich.

Weiterhin sind DAB (Digital Audio Broadcasting)-Rundfunkempfangskarten für den Einsatz in einem Rechner bereits bekannt, wobei ein Prozessor des Rechners eine Fehlerkorrektur und ein Zusammenfügen von Daten, die in den DAB-Signalen enthalten sind, übernimmt, wobei die DAB-Signale nach Demodulation durch ein Hochfrequenzempfangsteil und Digitalisierung durch einen Analog-Digital-Wandler zu dem Prozessor des Rechners von der DAB-Rundfunkempfangskarte übertragen werden. Mit anderen Komponenten des Rechners, wie mit einer Soundkarte und einem angeschlosssenen Lautsprecher, werden die Informationen, die in den DAB-Signalen enthalten sind dargestellt. Es handelt sich bei dem Rechner um einen nicht industrietauglichen Rechner.

### Vorteile der Erfindung

Der erfindungsgemäße Rundfunkempfänger zum Empfang von digitalen Rundfunksignalen mit den Merkmalen des unabhängigen Patentanspruchs hat demgegenüber den Vorteil, daß mittels des Rundfunkempfängers, der mit einem Rechner verbunden ist, der eine industrietaugliche Bauweise aufweist, zum Beispiel mit dem Compact PCI-Standard, Daten empfangen werden, die in Rundfunksignalen enthalten sind. Das ist eine sehr einfache und flexible Methode, denn einerseits werden bekannte Rundfunkübertragungsverfahren, wie zum Beispiel DAB (Digital Audio Broadcasting), die eine komfortable Möglichkeit für die Übertragung von Daten bieten, verwendet, und andererseits wird damit auf eine vorhandene Senderstruktur zurückgegriffen, so daß für ein Datenverteilsystem nur die Anschaffung des Rundfunkempfängers, eines Antennenkabels und einer Antenne für jeweils einen Nutzer erforderlich ist. Daher ist auf diese Weise der Aufbau eines Informationssystems sehr leicht zu planen und zu verwirklichen.

Durch die Verbindung des Rundfunkempfängers mit dem Rechner wird der Vorteil gewonnen, daß der Rundfunkempfänger mit anderen Modulen des Rechners, die Datenverarbeitungseinheiten, wie zum Beispiel ein Prozessor des Rechners oder eine Grafikkarte, aufweisen, kombinierbar ist. Dadurch wird eine große Variationsmöglichkeit in der Art der zu übertragenden Daten erreicht, denn ob es nun Audio- oder Videodaten sind, man kann entsprechende Datenverarbeitungseinheiten, die sich auf Rechnerkarten befinden, mit dem Rundfunkempfänger kombinieren, so daß die Daten von dem Rundfunkempfänger zu anderen Karten des Rechners über einen Bus übertragen werden, damit diese Daten zum Beispiel dargestellt werden.

Darüber hinaus ist von Vorteil, daß der Rundfunkempfänger die Fehlererkennung und die Fehlerkorrektur der empfangenen Rundfunksignale selbst vornimmt, so daß die hohe Belastung des Prozessors des Rechners stark reduziert wird. Damit wird Rechenleistung für weitere Aufgaben des Rechners freigestellt.

Weiterhin ist von Vorteil, daß ein Prozessor des Rundfunkempfängers die Daten nach der Fehlererkennung und der Fehlerkorrektur zusammenfaßt, wodurch der Prozessor des Rechners von dieser Arbeit entlastet wird. Diese Weiterbildung führt zu einer schnelleren Verarbeitung der Daten durch den Rundfunkempfänger und den Rechner.

Darüber hinaus werden Teile der Signalverarbeitung, die ein autonomer Rundfunkempfänger selbst durchführen wird, wie zum Beispiel das Decodieren der Daten, durch Komponenten des Rechners durchgeführt. Durch das Vorhandensein eines leistungsstarken Prozessors des Rechners kann so die Signalverarbeitung auf dem Rundfunkempfänger einfach gehalten werden, wodurch der Rundfunkempfänger zu einem billigem Produkt führt.

Durch die in den abhängigen Ansprüchen aufgeführten Maßnahmen sind vorteilhafte Weiterbildungen und Verbesserungen des im unabhängigen Anspruch angegebenen Rundfunkempfängers möglich.

Besonders vorteilhaft ist, daß durch die Versendung der Daten über den Bus der Platte in Blöcken eine einfache Verarbeitungsmöglichkeit gegeben ist und daß die Übertragung eines Datenstroms nicht den ganzen Bus blockiert, sondern daß zwischen der Übertragung der Datenblöcke eines Datenstroms andere Komponenten ihre Daten versenden können.

Weiterhin ist von Vorteil, daß wenn ein Industriestandard wie der Compact PCI-Standard verwendet wird, eine große Industrietauglichkeit erreicht wird, so daß auf eine bereits große Anzahl von vorhandenen Rechnerkarten zurückgegriffen werden kann, womit eine große Variationsmöglichkeit in der Gestaltung der Rechnersysteme ermöglicht wird.

Darüber hinaus ist von Vorteil, daß durch die Verwendung zum Beispiel des Compact PCI-Standards eine hohe mechanische Belastbarkeit des Gesamtsystems erreicht wird.

Durch die Abschirmung von Hochfrequenzkomponenten auf dem Rundfunkempfänger wird vorteilhafterweise erreicht, daß keine hochfrequente Leistung von dem Rundfunkempfänger ungewollt abgestrahlt wird und möglicherweise andere Komponenten des Rechners stört und, daß keine Hochfrequenzsignale von anderen Komponenten die Hochfrequenzelemente auf dem Rundfunkempfänger stören.

Weiterhin ist von Vorteil, daß der Rundfunkempfänger während des Betriebs des Rechners mit dem Rechner verbunden wird oder von dem Rechner gelöst wird, ohne daß es Schwierigkeiten bei dem Betrieb des Rechners geben wird. Wird zum Beispiel der Rundfunkempfänger ausgetauscht, weil ein Defekt auf dem Rundfunkempfänger vorliegt, dann wird nach erfolgtem Austausch der Rundfunkempfänger sofort wieder die Daten der Rundfunksignale an den Rechner liefern.

Darüber hinaus ist von Vorteil, daß der Prozessor des Rechners dem Rundfunkempfänger mitteilt, auf welchen Frequenzen Rundfunksignale empfangen werden sollen. Damit ist die einfache Steuerung des Rundfunkempfängers mit dem Rechner möglich.

### Zeichnung

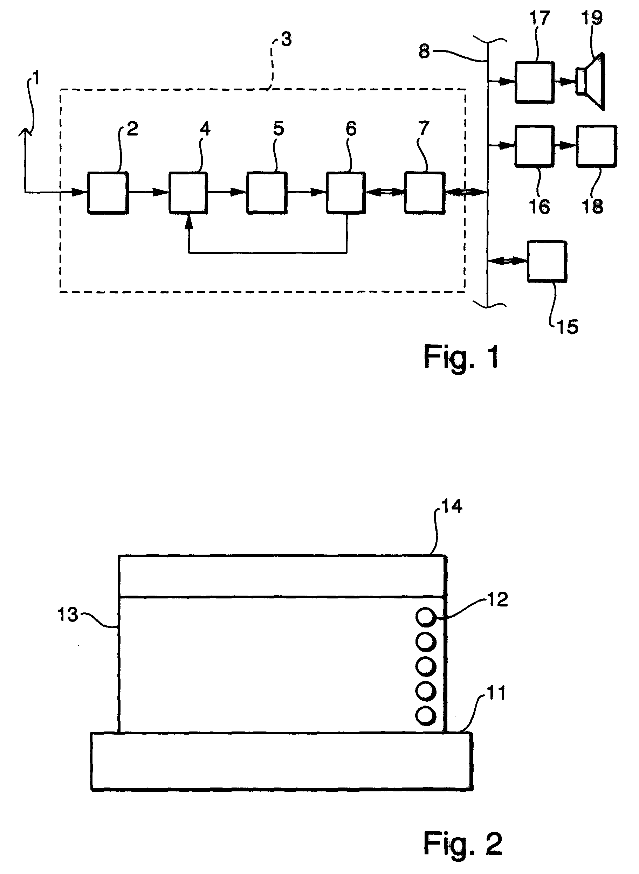

Ein Ausführungsbeispiel der Erfindung ist in der Zeichnung dargestellt und in der nachfolgenden Beschreibung näher erläutert. Es zeigen Figur 1 einen Rundfunkempfänger mit Anschluß an eine Antenne und an den Bus eines Rechners und Figur 2 eine schematische Darstellung der Buchse auf dem Rundfunkempfänger.

### Beschreibung des Ausführungsbeispiels

Um Fahrgastinformationen für Fahrgäste in Bahnen zu übermitteln, wobei die Fahrgastinformationen schnellen Änderungen unterworfen sind, so daß die Fahrgastinformationen nicht auf Speichermedien bevorratet werden können, sondern die Daten müssen laufend aktualisierbar bleiben, sind besonders drahtlose Übertragungsverfahren geeignet, wobei insbesondere mobile Einheiten, wie z.B. Bahnen, nicht auf ein Kabelnetz zugreifen können.

Um auf eine vorhandene Infrastruktur zurückzugreifen, sind zum Beispiel digitale Rundfunkübertragungsverfahren geeignet. Mit diesen Verfahren, wie zum Beispiel DAB (Digital Audio Broadcasting) bieten sich hervorragende Möglichkeiten, Daten in beliebigen Formaten zu übertragen. So ist es z.B. möglich, mittels DAB kurze Videosequenzen problemlos zu übertragen, mit einem DAB-Rundfunkempfänger zu empfangen und zu verarbeiten und dann die empfangenen Daten mittels eines Prozessors eines Rechners weiterzuverarbeiten und schließlich mittels einer Grafikkarte und eines Monitors darzustellen.

Daher empfängt der erfindungsgemäße Rundfunkempfänger DAB-Signale, die die Daten enthalten, die vom Rechner, mit dem der Rundfunkempfänger verbunden ist, akustisch und/oder optisch dargestellt werden. Zur akustischen Darstellung wird vorzugsweise eine Soundkarte mit einem Lautsprecher verwendet und zur optischen Darstellung eine Grafikkarte mit einem an die Grafikkarte angeschlossenem Monitor. Die Soundkarte und die Grafikkarte weisen jeweils eine Signalverarbeitung auf, die die Daten für die Darstellung mit dem Lautsprecher und mit dem Monitor aufbereiten.

DAB ist ein digitales Rundfunkverfahren, wobei neben dem eigentlichen Audioprogramm weitere Dateninformationen mit übertragen werden. DAB ist insbesondere auch für den mobilen Empfänger geeignet, da die Eigenschaften von DAB auf mobilen Empfang ausgelegt sind. Insbesondere durch das Verteilen der Informationen auf viele Trägerfrequenzen, wobei sich die Informationen auf den unterschiedlichen Trägerfrequenzen gegenseitig nicht stören, wird erreicht, daß eine frequenzselektive Dämpfung das ganze Signal nicht so weit abschwächt, daß ein Empfang nicht mehr möglich ist, sondern es wird bei einer frequenzselektiven Dämpfung nur die Information, die auf der Frequenz übertragen wird, die diese starke Dämpfung aufweist, verloren gehen. Man nennt das Verteilen der Signale auf verschiedene Trägerfrequenzen orthogonalen Frequenzmultiplex (engl. OFDM=Orthogonal Frequency Division Multiplex).

Durch fehlerkorrigierende Codes kann dieser Teil der Information, der durch Übertragungsfehler beschädigt wurde, aber im Rundfunkempfänger wieder rekonstruiert werden.

Diese fehlerkorrigierenden Codes erfordern, daß im Sender den zu übertragenden Daten zusätzliche Daten hinzugefügt werden, es wird demnach Redundanz hinzugefügt. Diese Redundanz wird entweder an einem Ende eines Datenblocks hinzugefügt, wobei diese Codes Blockcodes genannt werden, oder die Redundanz wird mittels einer vorgegebenen Regel an verschiedenen Positionen zwischen den Daten hinzugefügt, man nennt diese Codes Faltungscodes. Im Rundfunkempfänger werden dann mittels dieser Redundanz auftretende Fehler korrigiert. Bei den Blockcodes für DAB und für DMB (Digital Multimedia Broadcasting) werden vor allem Reed-Solomon-Codes verwendet. Diese Kodierung wird mit Kanalkodierung bezeichnet.

DMB bezeichnet ein Rundfunkübertragungsverfahren, bei dem neben Audioprogrammen auch Bild-, Text und Videodaten übertragen werden.

Bei DAB sind verschiedene Übertragungsmoden für Daten möglich. Zum einen ist es möglich, einen Datenstrom zu übertragen, im englisch bezeichneten Stream-Mode. Dieser Mode ist besonders für die Echtzeit-Übertragung von Videosequenzen geeignet, weil die Daten nicht in Blöcken umformatiert werden, sondern als Datenstrom vorliegen.

Zum anderen ist es möglich, Daten in kleinen Blöcken zu übertragen. Hierfür wird das MOT (Multimedia Object Transfer)-Protokoll verwendet. Es gestattet die Aufteilung der Daten in kleine Blöcke, die dann im Empfänger wieder zusammengesetzt werden müssen. Im übrigen werden in einem dritten Mode die Audioprogramme übertragen.

Neben DAB sind auch andere digitale Rundfunkübertragungsverfahren wie DVB (Digital Video Broadcasting) und DRM (Digital Radio Mondial) für solch eine Datenübertragung geeignet. Diese Verfahren unterscheiden sich im wesentlichen durch eine unterschiedliche Rahmenstruktur, eine unterschiedliche Bandbreite und einen von DAB unterschiedlichen Sendefrequenzbereich, aber auch hier wird zum Beispiel mit fehlerkorrigierenden Codes und OFDM gearbeitet. Analoge Rundfunkverfahren weisen zuweilen digitale Träger auf, wie zum Beispiel das bekannte Radio Data Signal, die auch zu solch einer Informationsübertragung genutzt werden können.

Ein handelsüblicher Rechner, den sich zum Beispiel Personen privat für verschiedene Zwecke anschaffen, weist zum Zwecke der Erweiterbarkeit Steckplätze auf, in die verschiedene Datenverarbeitungseinheiten als Steckkarten, wie zum Beispiel eine Grafikkarte, die zur Darstellung der Daten auf einem Monitor dient, eingesteckt werden. Mittels spezieller Software, sogenannten Treibern, spricht der Prozessor des Rechners die einzelnen Steckkarten an. Die Kommunikation zwischen den Karten und anderen Komponenten des Rechners geschieht über einen Bus. Der Bus ist ein Leitungssystem, an den Komponenten und die Steckkarten eines Rechners angeschlossen sind und ihre Daten untereinander versenden.

Es gibt verschiedene Standards, die die mechanische Befestigung und zum Beispiel die Datenübertragungsrate über solch ein Bussystem beschreiben. Um für Industrieanwendungen einen anspruchsvollen Standard zu schaffen, der insbesondere auf mechanische Widerstandsfähigkeit ausgelegt ist, wurde der Compact PCI-Standard geschaffen. Dieser Standard weist neben der mechanischen Belastbarkeit, so daß die Wartung eines Rechners mit diesem Standard in den Rechner stark beanspruchenden Umgebungen gering gehalten wird, eine große Flexibilität aus, was ihn für viele Anwendungen attraktiv macht. Zum Beispiel befindet sich der Prozessor des Rechners nicht wie bei vielen Standard-Rechnern auf der Platte, sondern auch auf einer Steckkarte, so daß sich eine Anpassung und ein Austausch des Prozessors als sehr einfach gestalten. Dieser Compact PCI-Standard wird also als industrietauglich bezeichnet. Als Stecker für den Compact PCI-Standard wird ein Stecker mit fünf Reihen mit jeweils zweiundzwanzig Pins festgelegt, wobei auf den Rechnerkarten, wie es auch der erfindungsgemäße Rundfunkempfänger ist, sich eine Buchse befindet, die passend für diesen Stecker ist, der sich auf der Platte des Rechners an der Stelle der Steckplätze befindet. Daher weist diese Buchse fünf Reihen mit jeweils zweiundzwanzig Buchsen auf. Damit liegt ein 32-Bit-Compact-PCI-Stecker vor, wobei für einen 64-Bit-Compact-PCI-Stecker eine weitere Buchse mit fünf Reihen mit jeweils zweiundzwanzig Buchsen verwendet wird.

In Figur 1 ist ein Rundfunkempfänger dargestellt. Der Rundfunkempfänger 3 ist mit einer Antenne 1 und einem Bus 8 eines Rechners verbunden.

Mittels der Antenne 1 werden DAB-Signale empfangen und gelangen über ein Antennenkabel von der Antenne 1 zu einem Hochfrequenzstecker 2. Der Hochfrequenzstecker 2 befindet sich auf dem Rundfunkempfänger 3, während die Antenne 1 und das Antennenkabel sich außerhalb des Rundfunkempfängers und des Rechners, in dem sich der Rundfunkempfänger selbst befindet, vorliegen.

Über den Hochfrequenzeingang 2 gelangen die DAB-Signale zum Hochfrequenzempfangsteil 4. Im Hochfrequenzempfangsteil 4 werden die DAB-Signale in eine niedrigere Zwischenfrequenz umgesetzt, verstärkt und dann gelangen diese umgesetzten Signale in einen Analog-Digital-Wandler 5. Das Hochfrequenzempfangsteil 4 führt damit eine Demodulation durch.

Im Analog-Digital-Wandler 5 werden die Signale digitalisiert. Die digitalisierten Signale gelangen als Daten vom Ausgang des Analog-Digital-Wandlers 5 zu einem Prozessor 6. Der Prozessor 6 führt an den Daten eine Fehlerkorrektur aus und übergibt die Daten einer Schnittstelleneinheit 7.

Weiterhin ist der Prozessor 6 über einen Datenausgang mit dem Hochfrequenzempfangsteil 3 verbunden, um den Empfangsfrequenzbereich festzulegen. Dafür erhält der Prozessor 6 von der Schnittstelleneinheit 7 Daten, in welchem Frequenzbereich Rundfunksignale zu empfangen sind. Über den Bus 8 erhält die Schnittstelleneinheit 7 von einem Prozessor 15 diese Daten über den Empfangsfrequenzbereich. Somit ist eine Senderwahl mittels des Rechners möglich.

Der Prozessor 6 kann im übrigen weitere Signalverabeitungsaufgaben an den Daten übernehmen, um andere Komponenten des Rechners zu entlasten. Zum Beispiel sind in den DAB-Signalen nicht nur die relevanten Informationen für ein Informationssystem, das mit dem Rundfunkempfänger und dem Rechner benutzt wird, enthalten, sondern auch anderen Daten wie insbesondere Audioprogramme. Es kann daher die Aufgabe des Rundfunkempfängers 3 sein, bestimmte Informationen aus den DAB-Signalen zu entnehmen. Dazu weist der Prozessor 6 Software auf, mit der der Prozessor 6 die Daten, die der Rundfunkempfänger 3 über den Bus 8 an andere Komponenten weiter übertragen soll, erkennt.

Bei DAB und anderen Rundfunkübertragungsverfahren bietet eine Rahmenstruktur verschiedene Möglichkeiten, Daten zu kennzeichnen, so daß der Prozessor 6 erkennt, wo in einem Rahmen sich die relevanten Informationen befinden. Die Software, die der Prozessor 6 dafür nutzt, ist entweder bei autarken Rechnern fest installiert oder bei einem flexiblen Einsatz kann die Software nach Bedarf geändert werden.

Wird die Software geändert, erhält die Schnittstelleneinheit 7 über den Bus 8 die entsprechenden Daten. Die Schnittstelleneinheit 7 übergibt dem Prozessor 6 diese Daten, so daß der Prozessor 6 mittels dieser Daten die Änderungen in der Software vornehmen kann.

Die Schnittstelleneinheit 7 unterteilt die Daten in Blöcke, die die Schnittstelleneinheit 7 über den Bus 8 zu anderen Komponenten des Rechners versendet. Diese anderen Komponenten sind hier insbesondere der Prozessor 15 des Rechners. Der Prozessor 15, der direkt an den Bus 8 zum Datenaustausch angeschlossen ist, führt die Decodierung der Daten, die von der Schnittstelleneinheit 7 versendet werden, durch. Beispielsweise führt der Prozessor 15 eine MPEG-2-Decodierung durch, wenn die Daten mit MPEG-2 codiert wurden.

MPEG-2 ist ein bekanntes und weit verbreitetes Komprimierungsverfahren, um die Datenmenge, die für Ton- und Bildübertragungen erforderlich ist, zu reduzieren. Um diese Reduktion zu erzielen, wird Redundanz aus den Originaldaten entfernt, diese Redundanz ist für eine empfängerseitige Rekonstruktion der Ton- und Bilddaten nicht erforderlich.

Nach der Decodierung der Daten und einer Datenformatierung, es werden also zusammengehörige Daten zusammengefaßt, versendet der Prozessor 15 die Daten über den Bus 8 zu den Darstellungseinrichtungen. Dabei handelt es sich um eine Grafikkarte 16, die an den Bus 8 angeschlossen ist und an die selbst ein Monitor 18 angeschlossen ist, und um eine Soundkarte 17, die an den Bus 8 angeschlossen ist und an die selbst ein Lautsprecher 19 angeschlossen ist.

Je nach Ausführung des Prozessors 6 des Rundfunkempfängers 3 werden Aufgaben wie die Zusammenfassung von zum Beispiel MOT-Datenpaketen zu größeren Datengruppen auch im Prozessor 6 durchgeführt. MOT-Datenpaketen weisen Merkmale auf, die es gestatten, MOT-Datenpaketen zu identifizieren und damit zusammengehörige MOT-Datenpaketen zusammenzufassen.

Die Größeneinteilung der Blöcke, die über den Bus 8 übertragen wird, ist frei wählbar und kann zum Beispiel an die Zugriffsbelastung des Busses 8 angepaßt werden. Wenn viele Komponenten des Rechners den Bus 8 zur Datenübertragung benutzen, dann liegt eine hohe Belastung des Busses 8 vor, und es ist günstiger für die Schnittstelleneinheit 7, wenn die Schnittstelleneinheit Daten über den Bus versenden möchte, ihre Daten in kleinen Blöcken zu versenden, wenn die Schnittstelleneinheit 7 an der Reihe ist, Daten über den Bus 8 zu versenden. Die Schnittstelleneinheit 7 versendet dann ihre Daten in kleinen Blöcken, angepaßt an die hohe Belastung des Busses 8.

Liegt eine niedrige Belastung des Busses 8 vor, dann kann die Schnittstelleneinheit 7 die Daten in großen Blöcken über den Bus 8 versenden.

Damit der Datentransfer und die Durchführung der einzelnen der Aufgaben des Rundempfängers 3, des Prozessors 15 und der Darstellungseinrichtungen 16, 17, 18 und 19 gesteuert wird, ist der Rechner mit einer Software versehen, die den Ablauf steuert. Diese Software wird vom Prozessor 15 geladen, so daß damit der Prozessor 15 die Steuerung übernimmt.

In Figur 2 ist schematisch eine Vorderansicht einer Buchse 13 eines Rundfunkempfängers 11 dargestellt. Die Buchse 13 ist auf dem Rundfunkempfänger 11 befestigt. Die Buchse 13 weist eine Anzahl von kleinen Buchsen 12 auf, die gemäß dem Compact PCI-Standard fünf mal siebenundvierzig beträgt, in die die Pins des Steckers des Steckplatzes auf der Platte zur Herstellung der elektrischen und mechanischen Verbindung zwischen Rundfunkempfänger 11 und Platte eingeführt werden. Es sind beispielhaft nur fünf Buchsen 12 gemäß den fünf Reihen eingezeichnet. Bei der Buchse für den Compact PCI-Bus sind es also insgesamt 110 kleine Buchsen für eine 32-Bit-Compact-PCI-Buchse beziehungsweise 220 kleine Buchsen für eine 64-Bit-Compact-PCI-Buchse. Die Compact-PCI-Buchsen beziehungsweise Compact-PCI-Stecker sind in IEC 917 und IEC 1076-4-101 definiert.

Zur Abschirmung befindet sich auf der Buchse 13 eine Metallschicht 14, die einerseits die Abstrahlung von hochfrequenten Signalen und andererseits den Empfang von insbesondere Hochfrequenzsignalen verhindern soll. Durch solch eine Abschirmung wird erreicht, daß die Signale, die über die Buchse geleitet werden nicht nach außen abstrahlen und somit andere Komponenten des Rechners stören und daß Hochfrequenzsignale, die von anderen Komponenten des Rundfunkempfängers oder des Rechners kommen nicht die Signale durch Nebensprechen in der Buchse stören. Durch solche Störungen entstehen ungewollte Signale, die zum Beispiel zu einer fehlerhaften Darstellung führen.

Andere Hochfrequenzkomponenten des Rundfunkempfängers, der Hochfrequenzeingang 2 und der Hochfrequenzempfangsteil 4 weisen ebenfalls metallische Abschirmungen auf, um eine ungewollte Abstrahlung von hochfrequenten Signalen zu verhindern.

Der Rundfunkempfänger 11 weist die Eigenschaft auf, daß während des Betriebs des Rechners ein Rundfunkempfänger, der mit dem Rechner verbunden ist, ausgetauscht werden kann, ohne daß der Betrieb des Rechners gestört wird. Nach erfolgtem Austausch wird der Rundfunkempfänger sofort wieder Rundfunksignale empfangen und verarbeiten. Man bezeichnet diese Eigenschaft mit dem englischen Begriff Hot-Swap.

## Patentansprüche

1. Rundfunkempfänger zum Empfang von Rundfunksignalen, wobei der Rundfunkempfänger (3) mit einem Rechner verbunden ist, wobei über einen Hochfrequenzeingang (2) des Rundfunkempfängers (3) die Rundfunksignale zu einem Hochfrequenzempfangsteil (4) des Rundfunkempfängers gelangen, wobei das Hochfrequenzempfangsteil (4) des Rundfunkempfängers (3) die über den Hochfrequenzeingang (2) kommenden Rundfunksignale demoduliert, wobei ein Analog-Digital-Wandler (5) des Rundfunkempfängers (3) die demodulierten Rundfunksignale digitalisiert, so daß digitale Daten vorliegen, dadurch gekennzeichnet, daß ein Prozessor (6) des Rundfunkempfängers (3) eine Fehlererkennung und eine Fehlerkorrektur an den digitalen Daten vornimmt, daß der Prozessor (6) des Rundfunkempfängers (3) die digitalen Daten nach der Fehlerkorrektur für die Decodierung durch den Prozessor (15) des Rechners vorsortiert, indem der Prozessor (6) zusammengehörige Daten zu Blöcken zusammenfaßt und daß eine Schnittstelleneinheit (7) des Rundfunkempfängers die der Fehlerkorrektur unterzogenen, digitalen Daten über den Bus (8) zu einem Prozessor (15) des Rechners versendet, so daß der Prozessor (15) des Rechners die digitalen Daten decodiert sowie formatiert und an den Rechner angeschlossene akustisch und/oder optische Darstellungseinrichtungen, vorzugsweise eine Grafikkarte (16) mit einem Monitor (18) und/oder eine Soundkarte (17) mit einem Lautsprecher (19) versendet, um die decodierten Daten darzustellen.

2. Rundfunkempfänger nach Anspruch 1, dadurch gekennzeichnet, daß die Schnittstelleneinheit (7) die digitalen Daten über den Bus (8) zu dem Prozessor (15) des Rechners in Blöcken versendet.

3. Rundfunkempfänger nach Anspruch 1, dadurch gekennzeichnet, daß eine Buchse, die den Rundfunkempfänger (3) und den Rechner verbindet, fünf Reihen mit jeweils zweiundzwanzig beziehungsweise vierundvierzig Buchsen aufweist, vorzugsweise nach IEC 917 und IEC 1076-4-101, und daß die Buchse mit einem Bus (8) des Rechners verbunden ist.

4. Rundfunkempfänger nach Anspruch 1, dadurch gekennzeichnet, daß eine Buchse (11) des Rundfunkempfängers (3) eine metallische Abschirmung (14) aufweist.

5. Rundfunkempfänger nach Anspruch 4, dadurch gekennzeichnet, daß der Hochfrequenzeingang (2) und das Hochfrequenzempfangsteil (4) metallisch abgeschirmt sind, um eine Hochfrequenzabstrahlung zu vermeiden.

6. Rundfunkempfänger nach einem der vorhergehenden Ansprüche, dadurch gekennzeichnet, daß der Rundfunkempfänger (3) es ermöglicht, den Rundfunkempfänger (3) während des Betriebs des Rechners von dem Rechner zu lösen oder mit dem Rechner zu verbinden.

7. Rundfunkempfänger nach einem der vorhergehenden Ansprüche, dadurch gekennzeichnet, daß der Prozessor (15) über den Bus (8) Daten zu der Schnittstelleneinheit (7) sendet, die die Schnittstelleneinheit (7) dem Prozessor (6) übergibt, so daß der Prozessor (6) dem Hochfrequenzempfangsteil (3) mitteilt, auf welchen Frequenzen das Hochfrequenzempfangsteil (3) Rundfunksignale empfängt.
